# EUROPÄISCHE PATENTSCHRIFT

(11) **EP 0 564 683 B1**
(45) Veröffentlichungstag und Bekanntmachung des Hinweises auf die Patenterteilung: **13.12.2000**
(21) Anmeldenummer: 92106135.4
(22) Anmeldetag: 08.04.1992
(51) Int. Cl.: G01D 5/34

(54) **Optoelektronisches Weg-, Winkel- oder Rotationsmessgerät**
Optoelectronic length, angle, or rotation measuring device
Capteur optoélectronique de longueur, angle de rotation

(43) Veröffentlichungstag der Anmeldung: 13.10.1993
(73) Patentinhaber: Dr. Johannes Heidenhain GmbH, 83301 Traunreut (DE)
(72) Erfinder: Franz, Heinz-Günther, W-2000 Hamburg 67 (DE); Weber, Karl-Heinz, W-7200 Tuttlingen (DE)

(56) Entgegenhaltungen:
- EP-A- 0 328 661
- EP-A- 0 470 420
- US-A- 4 687 928

## Beschreibung

Gegenstand der Erfindung ist ein optoelektronisches Weg-, Winkel- oder Rotationsmeßgerät nach dem Oberbegriff des Anspruches 1.

Ein solches Gerät ist bekannt aus US-A-4687928.

Bei bekannten optoelektronischen Winkel-, Rotations- und Wegmeßgeräten tastet ein Lichtstrahl die Codespur eines Codeträgers oder Encoders ab und mißt ein Sensor die Intensitätsänderung des Lichtes durch die Codespur. Bei inkrementalen Meßsystemen werden zur Positionsbestimmung lediglich die Intensitätsänderungen gezählt. Bei Stromausfällen kann dies zum Verlust der Lageinformation führen. Absolute Meßsysteme können hingegen mehrere Codespuren mit verschiedener Codierung aufweisen, die eine Lagebestimmung allein aufgrund der jeweils ermittelten Codeinformation ermöglichen.

Meistens wird das sogenannte Durchlichtprinzip angewandt. Hierbei ist eine Lichtquelle so ausgerichtet, daß ihr Lichtstrahl durch einen beweglichen Codeträger in Form eines Glasmaßstabes oder einer transparenten Codescheibe fällt. Bei der Bewegung des Codeträgers wird der Lichtstrahl von einer durchwandernden optischen Codespur unterbrochen. Bei sehr feiner Teilung der Codespur in Hell- und Dunkelfelder ist der Einsatz einer Schlitzblende insbesondere aus Glas auf einer Seite des Codeträgers unumgänglich. Der lichtdurchlässige Bereich der Schlitzblende ist entsprechend der Codespur in Hell- und Dunkelfelder unterteilt, so daß nur bei deckungsgleicher Positionierung von Codespur und Schlitzblende die maximale Lichtmenge durchfällt. Ein optoelektronischer Sensor, der auf der von der Lichtquelle abgewandten Seite dieser Anordnung positioniert ist, empfängt infolgedessen ein gut durchmoduliertes Lichtsignal. Jeder Codespur ist ein Fotosensor zugeordnet, der das jeweils durchgelassene Lichtsignal empfängt und auswertet.

Dabei kann jeder Codespur ein separates fotoelektronisches Bauteil zugeordnet sein, welches auf einer Leiterplatte angeordnet ist. Es gibt aber auch schon industriell hergestellte Bauelemente, die auf einem Halbleiterchip mehrere lichtempfindliche Sensorflächen als sogenanntes Opto-Array aufweisen. In diesen Bauelementen sind die Halbleiterchips fertigungstechnisch aufwendig auf einem Zwischenträger mit elektrischen Leiterbahnen gebondet und mit einem Vergußrahmen versehen, der abschließend durch einen schützenden Transparentguß ausgefüllt ist. Diese Bauelemente werden auf eine separate Leiterplatte gelötet, die genau auf die Anordnung aus Codeträger und Blendeinrichtung ausgerichtet werden muß, damit das durchgelassene Licht in die lichtempfindlichen Sensorflächen fällt.

Die vorbekannten Meßgeräte haben somit den gemeinsamen Nachteil, daß sie aufgrund der einzeln durch Mikrodrähte kontaktierten Sensorelemente in separaten Bauelementen und der erforderlichen Ausrichtung der mehreren Bauteile empfindlich und aufwendig sind.

Davon ausgehend liegt der Erfindung die Aufgabe zugrunde, ein verbessertes optoelektronisches Weg-, Winkel- oder Rotationsmeßgerät zu schaffen, das weniger empfindlich und aufwendig ist.

Diese Aufgabe wird durch Anspruch 1 gelöst. Vorteilhafte Ausgestaltungen sind in den abhängigen Ansprüchen angegeben.

Bei einem erfindungsgemäßen Meßgerät ist die plattenförmige Blendeneinrichtung Träger des optoelektronischen Halbleiterchips. Dieser wird ohne Chipträger, Rahmen und durchsichtige Vergußmasse auf der Blendeneinrichtungs-Platte gehalten. Dabei kontaktieren der Platte zugewandte Kontaktstellen des Chips elektrische Leiterbahnen, die ebenfalls fest mit der Platte verbunden sind.

Vorzugsweise ist der Codeträger lichtdurchlässig und die Lichtquelle auf der von der Blendeneinrichtung abgewandten Seite angeordnet. Die Codespur kann eine optisch wirksame, insbesondere lichtabsorbierende oder reflektierende Beschichtung mit Hellfelder bildenden Unterbrechungen auf der Blendeneinrichtung zugewandten Seite des Codeträgers sein.

Als Blendeneinrichtung kommt eine transparente Platte mit einer lichtundurchlässigen Beschichtung auf der dem Codeträger zugewandten Seite in Betracht. Dabei wird der lichtdurchlässige Bereich von mindestens einer Unterbrechung gebildet, die einem Hellfeld der Codespur etwa deckungsgleich ist. Als Beschichtung von Codeträger bzw. Blendeneinrichtung kommt eine Chromschicht oder eine Fotoemulsionsschicht in Betracht. Weist der einer Codespur zugeordnete lichtdurchlässige Bereich mehrere Unterbrechungen auf, kann sich die lichtempfindliche Sensorfläche über sämtliche Unterbrechungen erstrecken, wodurch ein sehr starkes Signal meßbar ist.

Bei einer alternativen Blendeneinrichtung ist im lichtdurchlässigen Bereich mindestens ein Lichtleiter angeordnet, der sich von der dem Codeträger zugewandten zu der diesem abgewandten Plattenseite erstreckt. Der Lichtleiter leitet somit einen einerseits auf die Plattenoberfläche auftreffenden Lichtpunkt in einen Punkt auf der gegenüberliegenden Plattenseite weiter und blendet benachbarte, nicht in denselben Kanal fallende Lichtpunkte aus dem Übertragungskanal aus. Er kann als lichtleitende Faser innerhalb der Blendeneinrichtungs-Platte ausgebildet sein.

Dabei muß der Leitungsquerschnitt des Lichtleiter nicht unbedingt einem Hellfeld der Codespur entsprechen. Auch mehrere Lichtleiter können in einem Lichtleiterfeld der Blendeneinrichtung parallel nebeneinander angeordnet sein. Wenn die lichtempfindliche Sensorfläche etwa mit einem Hellfeld deckungsgleich ist, wird das Maximum weitergeleiteten Lichts bei entsprechender Ausrichtung des Codeträgers detektiert.

Ferner kann sich das Lichtleiterfeld senkrecht zur Bewegungsrichtung des Codeträgers über mehrere Codespuren erstrecken. In Bewegungsrichtung des Codeträgers erstreckt es sich vorzugsweise mindestens über die lichtempfindliche Sensorfläche des Halbleiterchips.

Lichtleitende Fasern eines Faserfeldes können in der Platte längsseitig zusammengesintert sein. Sie können mit angrenzenden homogenen Plattenabschnitten zusammengesintert sein, die außerhalb der Sensorfläche der Befestigung des Chips und der Kontaktierung dienen können.

Bei beiden alternativen Blendeneinrichtungen besteht die Platte bevorzugt aus Glas.

In einem einzigen Halbleiterchip können mehrere lichtempfindliche Sensorflächen für verschiedene Codespuren angeordnet sein, deren Signale über Kontaktstellen an getrennte elektrische Leiterbahnen weitergegeben werden. Für eine einfache Befestigung des Halbleiterchips ist dieser an seinen Kontaktstellen mittels eines Verbindungsmittels an den elektrischen Leiterbahnen der Blendeneinrichtung gehalten. Das Verbindungsmittel, beispielsweise ein Lot oder ein Klebstoff, ist elektrisch leitend.

Bevorzugt sind die Leiterbahnen von den Kontaktstellen zur Peripherie der Blendeneinrichtungs-Platte geführt, wo eine weitere Verdrahtung einfach durchgeführt werden kann. Die Leiterbahnen können auf die Platte gedruckt oder geätzt sein und insbesondere aus Gold bestehen. Aus Isolationsgründen kann der Halbleiterchip auf der vom Codeträger abgewandten Seite der Platte von einem Vergußmittel bedeckt sein. Ein lichtundurchlässiges Vergußmittel schützt vor störenden Lichteinflüssen.

Ein erfindungsgemäßes Weg-, Winkel- oder Rotationsmeßgerät hat den Vorteil einer vereinfachten Herstellung wegen der Simultankontaktierung der Kontaktstellen mit den elektrischen Leiterbahnen. Dafür braucht lediglich ein Verbindungsmittel aufgebracht und der Chip richtig über den Leiterbahnen positioniert zu werden. Ist das Verbindungsmittel ein Lot, kann dieses an den Leiterbahnen appliziert werden, so daß der Chip nach Erhitzen auf Löttemperatur und Drücken der Kontaktstellen gegen die Leiterbahnen simultan kontaktiert.

Durch die gleichzeitige Nutzung der Platte als Blendeneinrichtung und Chipträger werden die Verarbeitungs- und Materialkosten erheblich gesenkt.

Zugleich hat der erfindungsgemäße Aufbau erhebliche optische Vorteile, insbesondere weil die Nähe der Sensoroberfläche zur Blendeneinrichtung eine hohe Nutzsignalausbeute und einen geringen Störstrahlungseinfluß garantiert.

Der erfindungsgemäße Aufbau bewirkt eine bedeutende Qualitätssteigerung des Meßgerätes, weil anfällige Strukturen entfallen. Insbesondere werden die bei herkömmlichen Einrichtungen vorhandenen verschiedenen Materialien mit unterschiedlichen Ausdehnungskoeffizienten vermieden, die bei wechselnder Temperaturbeanspruchung störungsanfällig sind. Die Störanfälligkeit ist extrem reduziert, wenn ein Halbleiterchip auf Siliciumbasis an einer Glasplatte befestigt wird.

Zugleich ist durch die Blendeneinrichtungs-Platte ein wirksamer Schutz des Halbleiterchips gegen beliebige Beanspruchung, insbesondere mechanischer oder chemischer Art, gegeben. Eine Nachjustierung der Ausrichtung des Halbleiterchips auf die Blendeneinrichtung entfällt wegen deren starrer Verbindung.

Weitere Einzelheiten und Vorteile der Erfindung ergeben sich aus der nachfolgenden Beschreibung der zugehörigen Zeichnungen, die herkömmliche und erfindungsgemäße Meßgeräte zeigen. In den Zeichnungen zeigen:
- Fig. 1: ein herkömmliches Meßgerät mit einem einzigen optoelektronischen Sensor im Querschnitt;
- Fig. 2: herkömmliches Meßgerät mit optoelektronischem Sensorchip im Querschnitt;
- Fig. 3: erfindungsgemäßes Meßgerät mit beschichteter Blendeneinrichtungs-Platte im Querschnitt;
- Fig. 4: ein erfindungsgemäßes Gerät mit Lichtkanäle aufweisender Blendeneinrichtungs-Platte im Teil-Querschnitt;
- Fig. 5: dasselbe Gerät in der Draufsicht, jedoch ohne Sensorchip;
- Fig. 6: Sensorchip für dasselbe Gerät in der Draufsicht;
- Fig. 7: dasselbe Gerät in vergrößertem Teil-Längsschnitt.

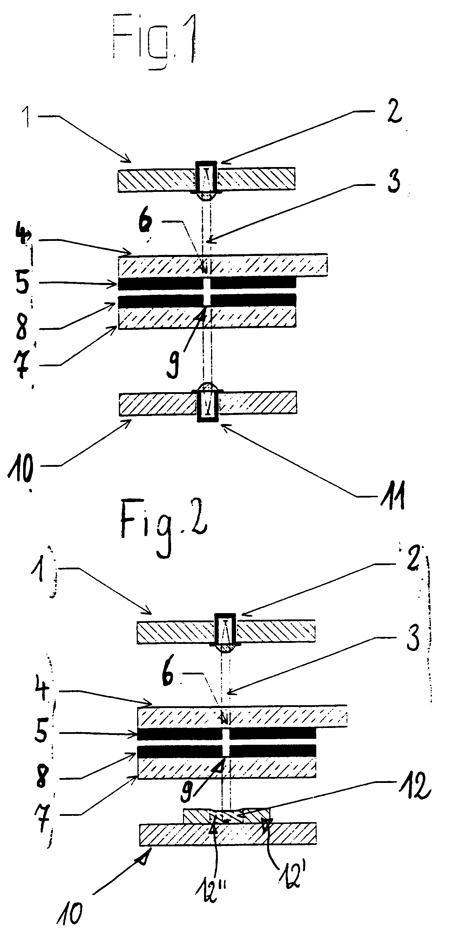

Das herkömmliche Meßgerät gemäß Fig. 1 hat eine Trägerplatte 1 mit einer darin eingelöteten Lichtquelle 2, deren Lichtstrahl 3 senkrecht von der Trägerplatte nach unten weggerichtet ist. Parallel zur Trägerplatte 1 ist darunter ein Codeträger in Form einer Codescheibe 4 angeordnet. Hier handelt es sich um die drehbare Codescheibe 4 eines Rotationsmeßgerätes, deren nicht abgebildete Drehachse in der Zeichnung rechts angeordnet ist. Die transparente Codescheibe 4 weist unterseitig eine lichtundurchlässige Chrom-Beschichtung 5 auf, deren Unterbrechungen Hellfelder bilden, von denen eines bei 6 gezeigt ist.

Parallel unter der Codescheibe 4 ist eine Blendeneinrichtung 7 in Form einer Platte mit einer oberseitigen Chrom-Beschichtung 8 angeordnet. Die Beschichtung 8 weist ebenfalls Unterbrechungen auf, die den Hellfeldern 6 der Codierscheibe entsprechen und von denen eine bei 9 gezeigt ist. Unterhalb der transparenten Platte 7 befindet sich eine weitere Trägerplatte 10, in die ein optoelektronisches Sensorbauteil 11 eingelötet ist. Ein Lichtstrahl 3 aus dem Lichtsensor 2 gelangt durch die Codierscheibe 4 und die Blendeneinrichtung 7 in den Sensor 11, wenn die Öffnungen 6, 9 einander überdecken. Die gegenüber den übrigen Geräteteilen bewegliche Codierscheibe 4 durchläuft abwechselnd mit Unterbrechungen 6 und Beschichtung 5 den Lichtstrahl, so daß der Sensor 11 ein moduliertes Signal entsprechend der Codierscheiben-Bewegung abgibt.

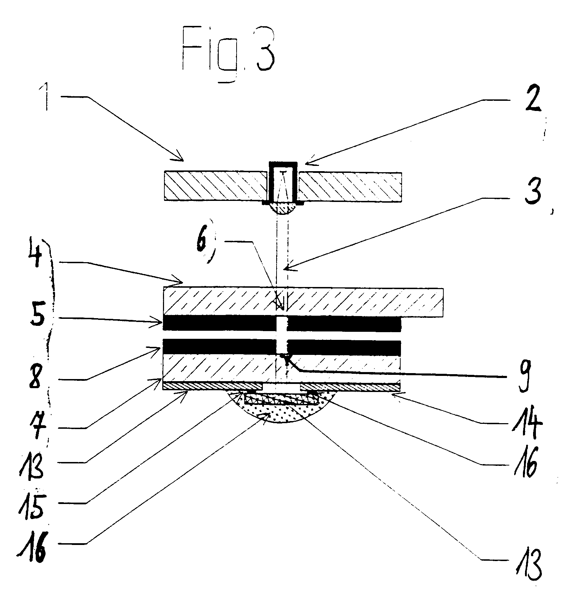

Das weitere schon im Stand der Technik bekannte Gerät gemäß Fig. 2 wurde hinsichtlich seiner übereinstimmenden Merkmale mit identischen Bezugsziffern versehen. Insoweit wird auf obige Erläuterungen Bezug genommen. Es unterscheidet sich lediglich durch einen anderen optoelektronischen Sensor 12 auf der unteren Trägerplatte 10, der in einem Rahmen 12' einen mit Vergußmasse 12'' abgedeckten Halbleitersensor auf einem Substrat aufweist.

Die vorbekannten Geräte sind aufgrund der vielen Einzelbauteile und deren unterschiedlichen Materialien in der Herstellung aufwendig und empfindlich.

Ein erfindungsgemäßes Gerät gemäß Fig. 3 stimmt in Aufbau und Anordnung von oberer Trägerplatte 1, Lichtsender 2, Codierscheibe 4 einschließlich Beschichtung 5 mit Unterbrechungen 6 sowie Ausrichtung des Lichtstrahls 2 mit den zuvor beschriebenen Geräten überein.

Unterhalb der Codierscheibe 4 befindet sich eine Blendeneinrichtung, die ebenfalls oben auf einer transparenten Platte 7 eine undurchlässige Schicht 8 mit Unterbrechungen 9 aufweist. Die Platte 7 der Blendeneinrichtung ist zugleich mit ihrer Unterseite Träger für einen Halbleiterchip 13, der mit einer lichtempfindlichen Fläche auf die Unterbrechung 9 ausgerichtet ist. Zur Verbindung des Halbleiterchips 13 mit der Platte 7 ist letztere unterseitig mit Leiterbahnen 14, 15 versehen, die von Peripheriebereichen bis in die Nähe des Lichtstrahles 3 führen. Dort kommen die elektrischen Leiterbahnen 13, 14 mit Kontaktstellen 15, 16 des Halbleiterchips 13 zur Deckung, mit denen sie durch ein Verbindungsmittel verbunden sind.

Unterseitig ist der Halbleiterchip 13 von einer Vergußmasse 16 aus geschwärztem Kunststoff abgedeckt.

Sind die Unterbrechungen 6, 9 von Codescheibe und Blendeneinrichtung deckungsgleich aufeinander ausgerichtet, gelangt der Lichtstrahl 3 aus dem Lichtsender 2 in die lichtempfindliche Sensorfläche des Halbleiterchips 13. Eine (Dreh-)Bewegung der Codescheibe 4 bewirkt auch hier eine bewegungsabhängige Modulation des Lichtstrahles 3, die der optoelektronische Sensor detektiert und das Ausgangssignal an die Leiterbahnen 13, 14 weitergibt.

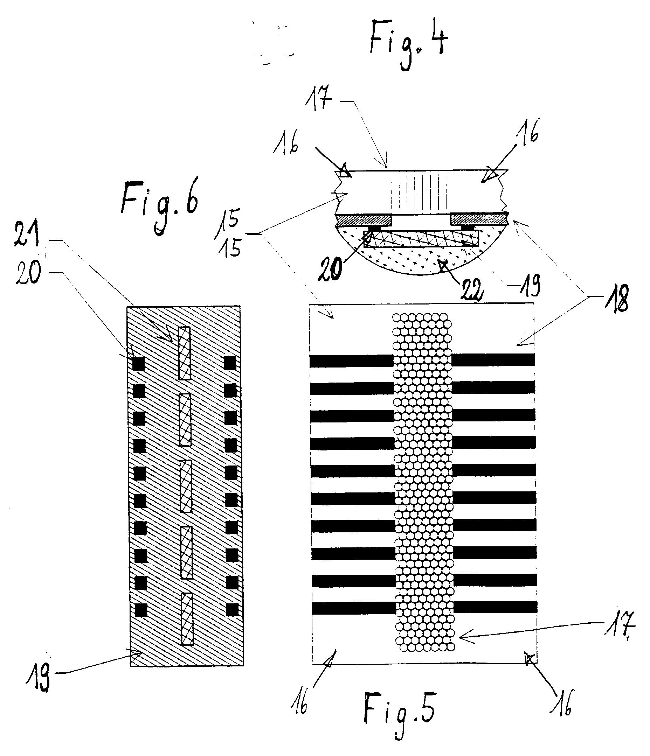

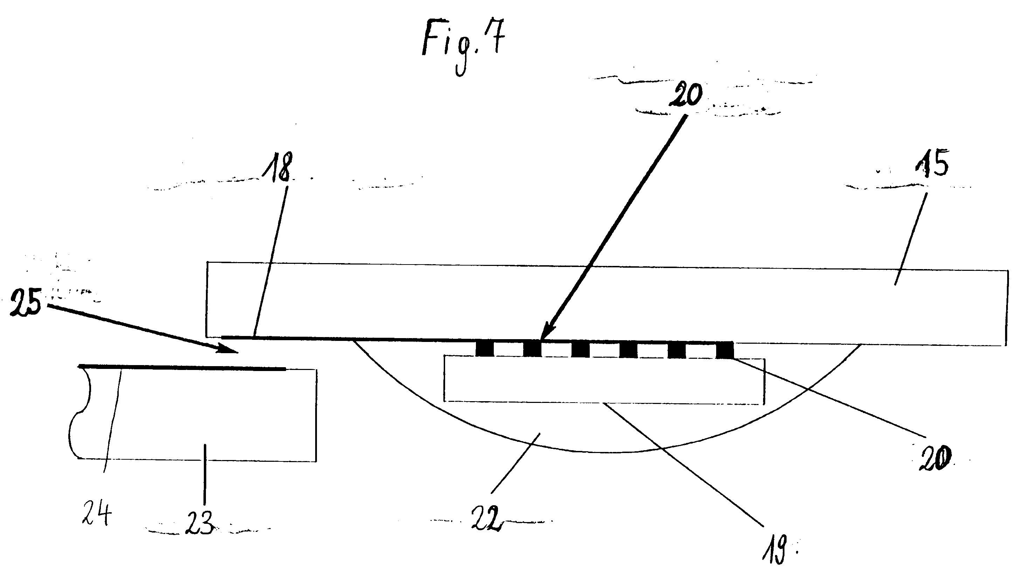

Die in den Fig. 4 bis 6 abgebildete Version kommt entsprechend Fig. 3 in Kombination mit einem oberen Träger 1 für eine Lichtquelle und einer Codescheibe 4 mit einer Beschichtung 5 mit Unterbrechungen 6 für einen Lichtstrahl 3 zum Einsatz. In den Fig. 4 und 5 dargestellt ist jedoch nur die Blendeneinrichtung und den optoelektronischen Sensor bildende Einheit.

Hier hat die Blendeneinrichtung eine Mikrofaserplatte 15, die zwischen homogenen Plattenabschnitten 16 ein paralleles Bündel Mikrofasern aufweist. Die Mikrofasern erstrecken sich gemäß Fig. 4 von der einer Codierscheibe zuzuwendenden Oberseite geradlinig zur Unterseite der Platte 15. Gemäß Fig. 5 sind benachbarte Mikrofaser-Reihen um einen halben Mikrofaser-Abstand gegeneinander versetzt, wodurch sich eine wabenartige Struktur ergibt. Die Mikrofasern 17 haben untereinander sowie mit den Plattenabschnitten 16 eine Sinterverbindung. Eine geeignete Mikrofaserplatte ist bei der Optolab GmbH, Norderstedt, Deutschland erhältlich.

Wie aus der Fig. 5 ersichtlich ist, erstreckt sich das so gebildete Feld aus Mikrofasern 17 in Querrichtung der Platte 15 zwischen beidseitig zur Peripherie geführten Leitungsbahnen 18 und in Längsrichtung praktisch über die gesamte Plattenlänge.

Gemäß Fig. 6 hat der zugehörige Halbleiterchip 19 auf seiner der Platte zugewandten Seite elektrische Kontaktstellen 20, von denen jede mit einer Leiterbahn 18 der Platte 15 zur Deckung gebracht werden kann. Zwischen den beiden randseitigen Reihen von Kontaktstellen 20 des Halbleiterchips 19 befinden sich mehrere lichtempfindliche Sensorflächen 21, deren elektrische Signale von verschiedenen Kontaktstellen abgegriffen werden können.

Gemäß Fig. 4 ist der Halbleiterchip 19 mit der Platte 15 verbunden, indem seine Kontaktstellen 20 mittels eines leitenden Verbindungsmittels an den Leiterbahnen 18 befestigt sind. Eine zusätzliche Befestigung und zugleich optische sowie elektrische Abschirmung wird durch ein Vergußmaterial 22 bewirkt, welches den Halbleiterchip 19 unterseitig abdeckt und sich randseitig bis auf die transparente Platte 15 erstreckt.

In einem vollständig assemblierten Gerät ist jede lichtempfindliche Fläche 21 des Halbleiterchips 19 einer Codespur eines Codeträgers zugeordnet. Befindet sich eine Unterbrechung der Codespur deckungsgleich über einer lichtempfindlichen Sensorfläche 21, so leiten die von der Oberseite zur Unterseite der Platte 15 führenden Lichtfasern 17 das durch die Öffnung tretende Licht genau in die lichtempfindliche Sensorfläche. Befindet sich die Öffnung des Codeträgers nicht über der lichtempfindlichen Sensorfläche 21, so wird gegebenenfalls durchtretendes Licht von benachbarten Lichtleitfasern 17 an eine nicht über der Sensorfläche 21 befindliche Stelle der Plattenunterseite transportiert bzw. tritt nur durch die seitlichen Plattenbereiche 15 hindurch. Die Lichtleiter 17 bewirken somit ein Ausblenden von Lichtstrahlen, die durch Öffnungen der Codespuren gelangen, wenn diese nicht deckungsgleich mit den Sensorflächen des Halbleiterchips angeordnet sind.

Fig. 7 zeigt in Seitenansicht, daß die Einheit aus Blendeinrichtungs-Platte 15 und Halbleiterchip 19 einfach mit einer angrenzenden Leiterplatte 23 verbunden werden kann. Hierzu werden die Leiterbahnen 18 mit Leiterbahnen 24 der Leiterplatte 23 über eine Weichlötverbindung 25 verbunden. Eventuell dabei auftretende Erwärmung wird zum Teil von der Versiegelung 22 absorbiert, bevor sie auf den Chip 19 einwirken kann.

Der Chip 19 ist mittels sogenannter "Bumps" als Löt-Verbindungsmittel bei 20 an Leiterbahnen 18 festgelegt. Dargestellt ist nur eine Leiterbahn 18, die einen gemeinsamen Anschluß für eine Signalleitung der optoelektronischen Halbleitersensoren bilden kann. Vom optoelektronischen Halbleitersensor gelangen die Sensorsignale durch die Simultankontaktierung 20 auf die Leiterbahnen 18 und werden von dort über die Leiterbahnen 24 der Leiterplatte 23 zwecks weiterer Verarbeitung übertragen. Die Leiterplatte 23 kann zugleich ein Träger für den Verbund aus Blendeinrichtung und Halbleiterchip sein.

## Patentansprüche

1. Optoelektronisches Weg-, Winkel- oder Rotationsmeßgerät, mit einem beleuchteten oder durchleuchteten Codeträger (4), wenigstens einer Codespur mit Hell- und Dunkelfeldern auf dem Codeträger, einer neben dem Codeträger angeordneten Blendeneinrichtung (7, 8, 15) mit der Codespur zugeordnetem lichtdurchlässigem Bereich (9) und einem optoelektronischen Sensor (13, 19), der auf der dem Codeträger abgewandten Seite der Blendeneinrichtung befestigt ist und eine dieser Seite zugewandte lichtempfindliche Sensorfläche (21) hat, in welche die Blendeneinrichtung von der Codespur beeinflußtes Licht (3) durchläßt, dadurch gekennzeichnet, daß der optoelektronische Sensor (13, 19) ein optoelektronischer Halbleiterchip (13, 19) mit der plattenförmigen Blendeneinrichtung (7, 8, 15) zugewandten Kontaktstellen (15, 16, 20) ist und die Blendeneinrichtung außerdem auf dieser Seite die Kontaktstellen des Halbleiterchips kontaktierende elektrische Leiterbahnen (13, 14, 18) trägt.

2. Gerät nach Anspruch 1, dadurch gekennzeichnet, daß der Codeträger (4) lichtdurchlässig und eine Lichtquelle (2) auf der von der Blendeneinrichtung (7, 8, 15) abgewandten Seite des Codeträgers angeordnet ist.

3. Gerät nach Anspruch 1 oder 2, dadurch gekennzeichnet, daß die Codespur eine Dunkelfelder bildende Beschichtung (5) mit Hellfelder bildenden Unterbrechungen (6) auf der der Blendeneinrichtung (7, 8) zugewandten Seite des Codeträgers (4) aufweist.

4. Gerät nach einem der Ansprüche 1 bis 3, dadurch gekennzeichnet, daß die Blendeneinrichtung eine transparente Platte (7) mit einer lichtundurchlässigen Beschichtung (8) mit mindestens einer einem Hellfeld der Codespur etwa deckungsgleichen Unterbrechung (6) im lichtdurchlässigen Bereich auf der dem Codeträger (4) zugewandten Seite ist.

5. Gerät nach Anspruch 3 oder 4, dadurch gekennzeichnet, daß die Beschichtung (5, 8) eine Chromschicht oder eine Fotoemulsionsschicht ist.

6. Gerät nach Anspruche 4 oder 5, dadurch gekennzeichnet, daß die lichtempfindliche Sensorfläche über mehrere Unterbrechungen (9) eines lichtdurchlässigen Bereiches der Blendeneinrichtung (7, 8) erstreckt ist.

7. Gerät nach einem der Ansprüche 1 bis 3, dadurch gekennzeichnet, daß die Blendeneinrichtung (15) in jedem lichtdurchlässigen Bereich mindestens einen Lichtleiter (17) hat, der von einer dem Codeträger (4) zugewandten zu einer diesem abgewandten Seite der Platte (15) erstreckt ist.

8. Gerät nach Anspruch 7, dadurch gekennzeichnet, daß jeder Lichtleiter eine lichtleitende Faser (17) ist.

9. Gerät nach Anspruch 7 oder 8, dadurch gekennzeichnet, daß mehrere Lichtleiter (17) der Blendeneinrichtung (15) parallel nebeneinander angeordnet sind und die lichtempfindliche Sensorfläche (21) etwa zumindest einem Hellfeld einer Codespur deckungsgleich ist.

10. Gerät nach Anspruch 9, dadurch gekennzeichnet, daß sich ein von den Lichtleitern (17) gebildetes Feld senkrecht zur Bewegungsrichtung des Codeträgers (4) über mehrere Codespuren erstreckt.

11. Gerät nach Anspruch 9 oder 10, dadurch gekennzeichnet, daß sich das von Lichtleitern (17) gebildete Feld in Bewegungsrichtung des Codeträgers (4) mindestens über die lichtempfindliche Sensorfläche (21) des Halbleiterchips (19) erstreckt.

12. Gerät nach einem der Ansprüche 9 bis 11, dadurch gekennzeichnet, daß die lichtleitenden Fasern (17) längsseitig zusammengesintert sind.

13. Gerät nach einem der Ansprüche 9 bis 12, dadurch gekennzeichnet, daß die lichtleitenden Fasern (17) mit angrenzenden homogenen Plattenabschnitten (16) längsseitig zusammengesintert sind.

14. Gerät nach einem der Ansprüche 1 bis 13, dadurch gekennzeichnet, daß die Platte (7, 15) der Blendeneinrichtung aus Glas besteht.

15. Gerät nach einem der Ansprüche 1 bis 14, dadurch gekennzeichnet, daß in einem Halbleiterchip (19) mehrere lichtempfindliche Sensorflächen (21) für verschiedene Codespuren angeordnet sind.

16. Gerät nach einem der Ansprüche 1 bis 15, dadurch gekennzeichnet, daß der Halbleiterchip (13, 19) an seinen Kontaktstellen (15, 16, 20) mittels eines Verbindungsmittels an den elektrischen Leiterbahnen (13, 14, 18) der Blendeneinrichtung gehalten ist.

17. Gerät nach Anspruch 16, dadurch gekennzeichnet, daß das Verbindungsmittel elektrisch leitend ist.

18. Gerät nach Anspruch 16 oder 17, dadurch gekennzeichnet, daß das Verbindungsmittel ein Lot ist.

19. Gerät nach einem der Ansprüche 16 bis 18, dadurch gekennzeichnet, daß das Verbindungsmittel ein Klebstoff ist.

20. Gerät nach einem der Ansprüche 1 bis 19, dadurch gekennzeichnet, daß die Leiterbahnen (13, 14, 18) von den Kontaktstellen zur Peripherie der Platte (7, 8, 15) der Blendeneinrichtung geführt sind.

21. Gerät nach einem der Ansprüche 1 bis 20, dadurch gekennzeichnet, daß die Leiterbahnen (13, 14, 18) auf die Blendeneinrichtungs-Platte (7, 8, 15) gedruckt oder geätzt sind.

22. Gerät nach einem der Ansprüche 1 bis 21, dadurch gekennzeichnet, daß die Leiterbahnen (13, 14, 18) aus Gold sind.

23. Gerät nach einem der Ansprüche 1 bis 22, dadurch gekennzeichnet, daß der Halbleiterchip (13, 19) auf der vom Codeträger (4) abgewandten Seite der Blendeneinrichtungs-Platte (7, 15) von einem Vergußmittel (16, 22) bedeckt ist.

24. Gerät nach Anspruch 23, dadurch gekennzeichnet, daß das Vergußmittel (13, 22) lichtundurchlässig ist.

## Claims

1. An optoelectronic length, angle or rotation measuring device, with an illuminated or transilluminated code carrier (4), at least one code track with light and dark fields on the code carrier, a stop device (7, 8, 9) arranged alongside the code carrier, with a light-transmitting region (4) associated with the code track, and an optoelectronic sensor (13, 19) which is fixed on the side of the stop device facing away from the code carrier and has a light-sensitive sensor surface (21) facing this side, wherein the stop device transmits light (3) affected by the code track, characterized in that the optoelectronic sensor (13, 19) is an optoelectronic semiconductor chip (13, 19) with contact sites (15, 16, 20) facing the plate-form stop device (7, 8, 15) and the stop device moreover carries on this side electrical conductor tracks (13, 14, 18) contacting the contact sites of the semiconductor chip.

2. A device according to claim 1, characterized in that the code carrier (4) is light-transmitting and a light source (2) is arranged on the side of the code carrier facing away from the stop device (7, 8, 15).

3. A device according to claim 1 or 2, characterized in that the code track comprises a coating (5) forming dark fields with interruptions (6) forming light fields, the coating being on the side of the code carrier (4) facing the stop device (7, 8).

4. A device according to any of claims 1 to 3, characterized in that the stop device is a transparent plate (7) with an opaque coating (8) with at least one interruption (6) approximately in register with a light field of the code track in the light-transmitting region, the coating being on the side facing the code carrier (4).

5. A device according to claim 3 or 4, characterized in that the coating (5, 8) is a chromium layer or a photo-emulsion layer.

6. A device according to claim 4 or 5, characterized in that the light sensitive sensor surface extends over a plurality of interruptions (9) of a light-transmitting region of the stop device (7, 8).

7. A device according to any of claims 1 to 3, characterized in that the stop device (15) has at least one light guide (17) in each light-transmitting region, extending from a side of the plate (15) facing the code carrier (4) to a side facing away therefrom.

8. A device according to claim 7, characterized in that each light guide is a light-guiding fibre (17).

9. A device according to claim 7 or 8, characterized in that a plurality of light guides (17) of the stop device (15) are arranged parallel alongside one another and the light sensitive sensor surface (21) is approximately in register with at least one light field of a code track.

10. A device according to claim 9, characterized in that a field formed by the light guides (17) extends perpendicular to the direction of movement of the code carrier (4) over a plurality of code tracks.

11. A device according to claim 9 or 10, characterized in that the field formed by light guides (17) extends in the direction of movement of the code carrier (4) at least over the light-sensitive sensor surface (21) of the semiconductor chip (19).

12. A device according to any of claims 9 to 11, characterized in that the light-guiding fibres (17) are sintered together at their long sides.

13. A device according to any of claims 9 to 12, characterized in that the light-guiding fibres (17) are sintered together with adjoining homogenous plate sections (16) at their long sides.

14. A device according to any of claims 1 to 13, characterized in that the plate (7, 15) of the stop device consists of glass.

15. A device according to any of claims 1 to 14, characterized in that a plurality of light-sensitive sensor surfaces (21) for different code tracks are arranged in one semiconductor chip (19).

16. A device according to any of claims 1 to 15, characterized in that the semiconductor chip (13, 19) is held at its contact sites (15, 16, 20) on the electrical conductor tracks (13, 14, 18) of the stop device by means of a bonding agent.

17. A device according to claim 16, characterized in that the bonding agent is electrically conductive.

18. A device according to claim 16 or 17, characterized in that the bonding agent is a solder.

19. A device according to any of claims 16 to 18, characterized in that the bonding agent is an adhesive.

20. A device according to any of claims 1 to 19, characterized in that the conductor tracks (13, 14, 18) are led from the contact sites to the periphery of the plate (7, 8, 15) of the stop device.

21. A device according to any of claims 1 to 20, characterized in that the conductor tracks (13, 14, 18) are printed or etched on the stop device plate (7, 8, 15).

22. A device according to any of claims 1 to 21, characterized in that the conductor tracks (13, 14, 18) are of gold.

23. A device according to any of claims 1 to 22, characterized in that the semiconductor chip (13, 19) is covered in a potting compound (16, 22) on the side of the stop device plate (7, 15) facing away from the code carrier (4).

24. A device according to claim 23, characterized in that the potting compound (13, 22) is opaque.

## Revendications

1. Appareil optoélectronique de mesure de longueurs, d'angles ou de rotation, comprenant un support à code (4) qui est éclairé ou traversé par un faisceau lumineux, au moins une piste à code avec des zones claires et des zones foncées prévue sur le support à code, un dispositif de masque (7, 8, 15) avec une zone (9) translucide associée à la piste à code , disposé à proximité du support à code et un capteur optoélectronique (13, 19) qui est fixé sur la face du dispositif de masque éloignée du support à code et comporte une surface de capteur (21) sensible à la lumière tournée vers ladite face du dispositif de masque, jusqu'à laquelle le dispositif de masque laisse parvenir de la lumière modifiée par la piste à code, caractérisé par le fait que le capteur optoélectronique (13, 19) est une puce à semi-conducteur (13, 19) optoélectronique avec des emplacements de contact (15, 16, 20) tournés vers le dispositif de masque (7, 8, 15) et que le dispositif de masque porte en outre sur cette face les pistes conductrices (13, 14, 18) qui assurent le contact avec les emplacements de contact de la puce à semi-conducteur.

2. Appareil selon la revendication 1, caractérisé par le fait que le support à code (4) est translucide et qu'une source de lumière (2) est disposée sur la face du support à code éloignée du dispositif de masque (7, 8, 15).

3. Appareil selon la revendication 1 ou 2, caractérisé par le fait que la piste à code comporte un revêtement (5) formant des zones sombres avec des discontinuités (6) formant des zones claires qui est appliqué sur la face du support à code (4) tournée vers le dispositif de masque (7, 8).

4. Appareil selon une des revendications 1 à 3, caractérisé par le fait que le dispositif de masque est une plaque transparente (7) pourvue d'un revêtement (8) opaque avec au moins une discontinuité (6) qui coïncide sensiblement avec une zone claire de la piste à code dans la zone translucide, sur la face tournée vers le support à code (4).

5. Appareil selon la revendication 3 ou 4, caractérisé par le fait que le revêtement (5, 8) est une couche de chrome ou une couche d'émulsion photographique.

6. Appareil selon la revendication 4 ou 5, caractérisé par le fait que la surface de capteur photosensible s'étend sur plusieurs discontinuités (9) d'une zone translucide du dispositif de masque (7, 8).

7. Appareil selon une des revendications 1 à 3, caractérisé par le fait que le dispositif de masque (15), dans chaque zone translucide, comporte au moins un guide de lumière (17) qui s'étend d'une face de la plaque (15) tournée vers le support à code (4) jusqu'à une face de ladite plaque éloignée dudit support à code.

8. Appareil selon la revendication 7, caractérisé par le fait que chaque guide de lumière est une fibre (17) conduisant la lumière.

9. Appareil selon la revendication 7 ou 8, caractérisé par le fait que plusieurs guides de lumière (17) du dispositif de masque (15) sont disposées parallèlement les unes aux autres, à côté les unes des autres, et que la surface de capteur (21) sensible à la lumière coïncide sensiblement avec au moins une zone claire d'une piste à code.

10. Appareil selon la revendication 9, caractérisé par le fait qu'une zone formée par les guides de lumière (17) s'étend perpendiculairement à la direction de déplacement sur plusieurs pistes à code.

11. Appareil selon la revendication 9 ou 10, caractérisé par le fait que la zone formée par les guides de lumière (17) s'étend dans la direction de déplacement du support à code (4) au moins sur la surface de capteur (21) sensible à la lumière de la puce à semi-conducteur (19).

12. Appareil selon une des revendications 9 à 11, caractérisé par le fait que les fibres (17) conduisant la lumière sont assemblées en paquet dans la direction longitudinale.

13. Appareil selon une des revendications 9 à 12, caractérisé par le fait que les fibres (17) conduisant la lumière sont assemblées dans la direction longitudinale avec des tronçons de plaque (16) homogènes adjacents.

14. Appareil selon une des revendications 1 à 13, caractérisé par le fait que la plaque (7, 15) du dispositif de masque est en verre.

15. Appareil selon une des revendications 1 à 14, caractérisé par le fait que plusieurs surfaces de capteur (21) sensibles à la lumière, pour plusieurs pistes à code sont disposées dans une puce à semi-conducteur (19).

16. Appareil selon une des revendications 1 à 15, caractérisé par le fait que la puce à semi-conducteur (13, 19), au niveau de ses emplacements de contact (15, 16, 20), est tenue sur les pistes conductrices (13, 14, 18) électriques à l'aide d'un moyen de liaison.

17. Appareil selon la revendication 16, caractérisé par le fait que le moyen de liaison est conducteur du courant électrique.

18. Appareil selon la revendication 16 ou 17, caractérisé par le fait que le moyen de liaison est une soudure.

19. Appareil selon une des revendications 16 à 18, caractérisé par le fait que le moyen de liaison est un adhésif

20. Appareil selon une des revendications 1 à 19, caractérisé par le fait que les pistes conductrices (13, 14, 18) mènent des emplacements de contact jusqu'à la périphérie de la plaque (7, 8, 15) du dispositif de masque.

21. Appareil selon une des revendications 1 à 20, caractérisé par le fait que les pistes conductrices (13, 14, 18) sont imprimées sur la plaque du dispositif de masque (7, 8, 15) ou gravées dans celle-ci.

22. Appareil selon une des revendications 1 à 21, caractérisé par le fait que les pistes conductrices (13, 14, 18) sont en or.

23. Appareil selon une des revendications 1 à 22, caractérisé par le fait que la puce à semi-conducteur (13, 19) est recouverte d'une masse moulée (16, 22) sur la face de la plaque du dispositif de masque (7, 15) éloignée du support à code (4).

24. Appareil selon la revendication 23, caractérisé par le fait que la masse moulée (13, 22) est opaque.
